# EUROPEAN PATENT APPLICATION

(11) **EP 2 963 605 A1**
(43) Date of publication of application: **06.01.2016**
(21) Application number: 14836486.2
(22) Date of filing: 14.08.2014
(51) Int. Cl.: G06Q 30/02, G06Q 50/10

(54) **ONLINE AND OFFLINE LINKED GAME SYSTEM, AND COMPUTER PROGRAM**

(30) Priority: 16.08.2013 KR 20130097035
(71) Applicant: Kim, Tae Kwan, Seoul 137-874 (KR)
(72) Inventor: Kim, Tae Kwan, Seoul 137-874 (KR)
(74) Representative: Ter Meer Steinmeister & Partner
(86) International application number: PCT/KR2014/007602
(87) International publication number: WO 2015/023155

(57) **Abstract**

Provided is an online and offline linked game system. An online and offline linked game system according to an embodiment of the present invention comprises: a determination unit for determining whether a mission has been completed on the basis of code data acquired with mission points; and a management unit for managing data for a set reward issued when the mission is determined to have been completed by the determination unit.

## Description

### TECHNICAL FIELD

The present invention relates to an online and offline linked game system and a computer program, and more particularly, to an online and offline linked game system and a program, which are implemented in an online and offline linked manner, thereby performing a predetermined mission in a specific region.

### BACKGROUND ART

Most games using devices such as computers are played as two-dimensional or three-dimensional games by game programs built in game consoles, PCs, and mobile devices.

For such conventional games, a user should be satisfied only by enjoying a game given through a game screen, and it is difficult that the user changes contents of the game.

Although a user is interested in a game by changing the degree of difficulty of the game for each step and varying contents of the game in each step, the contents of the game in each step are formalized, and therefore, the entire contents of the game are still not out of the formalized state.

Recently, a massively multiplayer online role-playing game (MMORPG) has won great popularity as a game which enables a plurality of users to enjoy various amusements with high degree of freedom through interactions between the users.

Conventional online games have a high degree of absorption and hence have many factors that cause users' interest. On the other hand, cases where users are hooked on the online games are considerably increasing.

Particularly, as users are absorbed in the online games in front of their computers or game consoles, a side effect such as fatness, trouble in the circulation of the blood, failing of eyesight, or myocardial infarction may be caused due to lack of exercise. In the case of students, the online games cause the students difficulty in their studies. Therefore, the online games are negatively recognized by parents of students, guardians, etc.

Accordingly, a plan for utilizing, as a productive form, a game platform having a high degree of absorption in an online game is required.

### DISCLOSURE

### TECHNICAL PROBLEM

An embodiment of the present invention is directed to a game system and a program, in which the form of an online game is implemented offline, thereby leading external activities in a game playing process.

Another embodiment of the present invention is directed to a game system and a program in the form of a massively multiplayer online role-playing game (MMORPG) implemented offline, in which a plurality of participants can complete a predetermined mission in competition or cooperation with one another based on a specific region.

Still another embodiment of the present invention is directed to a game system and a program, in which information on cultural properties or landmarks in a specific region are shared and combined with regional information, thereby experiencing sightseeing of a corresponding region in the form of a game.

### TECHNICAL SOLUTION

According to an aspect of the present invention, there is provided an online and offline linked game system, including: a determination unit configured to determine whether a mission has been completed based on a degree of similarity of code data as a photographed image of a subject existing at a mission point with a reference image; and a management unit configured to manage predetermined reward data issued when the determination unit determines that the mission has been completed.

The code data may be a photographed image of a subject existing at the mission point.

The photographed image may be data photographed at a specific point of the subject or a specific angle, and the determination unit may determine whether the mission has been completed by comparing the photographed image with a previously stored reference image.

The photographed image may be produced from a camera unit of a client device, and the camera unit may be provided a portion of the external appearance of the subject as a photographing guideline in the photographing of the subject.

The determination unit may determine whether the mission has been completed by considering location information of the client device together with the degree of similarity.

The reward data may include battle cards in collectable form, and a battle game in person versus person (PvP) among a plurality of users may be performed through the battle cards.

The mission point may exist in plurality at different geographical locations in a predetermined region.

The online and offline linked game system may further include a rank unit configured to determine ranks among a plurality of users by considering a number of completed missions and a time required to complete the missions.

The online and offline linked game system may further include an auxiliary unit configured to manage hint information on the code data. The hint information may be provided to users related to a corresponding user.

When a client device of a first user is disposed in a first region where the mission point is located, and a client device of a second user is located in a second region spaced apart from the first region, information on the mission point, transmitted from the client device of the second user, may be transmitted to the client device of the first user.

According to an aspect of the present invention, there is provided a computer program for implementing a function determining whether a mission has been completed based on a degree of similarity of code data as a photographed image of a subject existing at a mission point and a function of managing predetermined reward data issued when it is determined that the mission has been completed.

The code data may be a photographed image of a subject existing at the mission point.

The photographed image may be data photographed at a specific point of the subject or a specific angle, and the computer program may implement a function of determining whether the mission has been completed by comparing the photographed image with a previously stored reference image.

The computer program may implement a function of determining wherein whether the mission has been completed by considering location information of the client device together with the degree of similarity.

The reward data may include battle cards in collectable form, and a battle game in person versus person (PvP) among a plurality of users may be performed through the battle cards.

The mission point may exist in plurality at different geographical locations in a predetermined region.

The computer program may implement a function of determining ranks among a plurality of users by considering a number of completed missions and a time required to complete the missions.

The computer program may implement a function of managing hint information on the code data, and the hint information is provided to users related to a corresponding user.

When a client device of a first user is disposed in a first region where the mission point is located, and a client device of a second user is located in a second region spaced apart from the first region, information on the mission point, transmitted from the client device of the second user, may be transmitted to the client device of the first user.

It should be understood that different embodiments of the invention, including those described under different aspects of the invention, are meant to be generally applicable to all aspects of the invention. Any embodiment may be combined with any other embodiment unless inappropriate. All examples are illustrative and nonlimiting.

### ADVANTAGEOUS EFFECTS

As described above, according to the present invention, it is possible to provide an offline game and a program, in which a plurality of participants achieve a predetermined mission in a specific region by employing the play format of an online game.

Also, it is possible to provide a game system and a program, in which secrete code data is acquired from a specific mission point hidden in each region, and the secret code data is processed in the program, thereby quickly determining whether a mission has been completed.

In addition, it is possible to provide a game system and a program, in which reward data is issued by the completion of a mission, and an additional great battle game can be performed.

Also, it is possible to provide a game system and a program, which can provide participants with educational information having a high degree of absorption in linkage with sightseeing products of a corresponding region.

### BRIEF DESCRIPTION OF THE DRAWINGS

FIG. 1 is a block diagram illustrating a configuration of an online and offline linked game system according to an embodiment of the present invention.
FIGS. 2 to 4 are diagrams illustrating an example of a game playing process of users constituting the system of FIG. 1.
FIGS. 5 to 8 are diagrams illustrating an example of a method of acquiring a mission point and code data, included in the system of FIG. 1.
FIG. 9 is a diagram illustrating another example of the game playing process of the users constituting the system of FIG. 1.
FIG. 10 is a block diagram illustrating a configuration of an online and offline linked game system according to another embodiment of the present invention.
FIG. 11 is a diagram illustrating an example of a computer in which a computer program is installed according to an embodiment of the present invention.

### MODE FOR THE INVENTION

Exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The terminology used herein is for the purpose of describing example embodiments only and is not intended to be limiting of the present invention. As used herein, the singular forms are intended to include the plural forms as well, unless the context clearly indicates otherwise. It will be further understood that the terms "comprises" and/or "comprising," or "includes" and/or "including" when used in this specification, specify the presence of stated elements, and/or components, but do not preclude the presence or addition of one or more other elements and/or components thereof.

Hereinafter, an online and offline linked game system according to an embodiment of the present invention will be described with reference to the accompanying drawings.

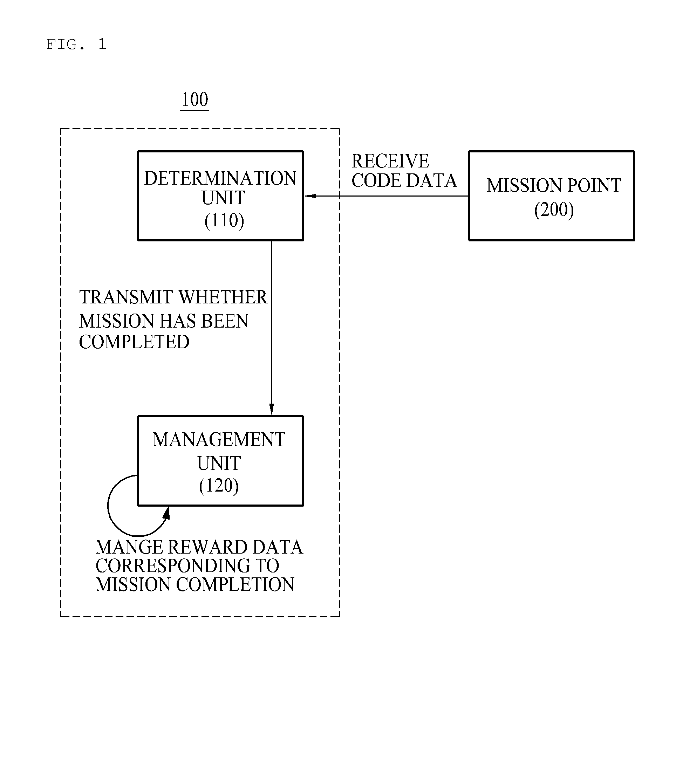

Referring to FIG. 1, there is shown a block diagram illustrating a configuration of an online and offline linked game system according to an embodiment of the present invention. The online and offline linked game system 100 according to the embodiment of the present invention may include a determination unit 110 and a management unit 120.

Specifically, the game system 100 includes the determination unit 110 which determines whether a mission has been completed based on code data acquired from a mission point 200 and the management unit 120 which manages predetermined reward data issued when it is determined that the mission has been completed.

The game system 100 may provide an environment in which a user acquires predetermined code data by accessing the mission point 200 disposed offline in a predetermined region, the determination unit 110 reads the code data to determine whether a mission has been completed, and a plurality of users can freely search for regions in a specified area and cooperate or compete with one another.

Also, the game system 100 may issue predetermined reward data to a corresponding user when it is determined that the mission has been completed, and provide the corresponding user with a motive in a different manner from other users in linkage with level-up and ranking systems.

The determination unit 110 receives code data, and determines whether the code data is code data corresponding to a corresponding mission by reading the code data. The code data may be a photographed image of a subject, but the present invention is not limited thereto. The code data may be configured in various forms including a series of code numbers recorded at a specific location of the mission point 200, a barcode, a two-dimensional QR code, a predetermined phrase, a number or symbol, and the like. The code data may be input through a mobile device of a participating user or an input device, such as a kiosk, provided in a predetermined region in which a mission is performed, to be transmitted to the determination unit 110.

The determination unit 110 may be provided in a mobile terminal or input device possessed by a user, but the present invention is not limited thereto. The determination unit 110 may be provided in a server which transmits/receives data to/from the mobile device or input device.

The determination unit 110 may be configured in the form of a mobile application, and may receive code data input through various input means.

The determination unit 110 may compare the input code data with preset result data. When the input code data is identical to the result data or satisfies a predetermined degree of similarity or higher, the determination unit 110 may determine that the mission has been completed. In this case, determination unit 110 may determine whether the mission has completed by considering location information of a client device possessed by the participating user. For example, the determination unit 110 may generate whether the mission has been completed, a mission clear score, or the like by determining whether the code data is code data input at a specific point. Particularly, when the code data is a photographed image of a subject existing at the mission point 200, the determination unit 110 may generate whether the mission has been completed, a mission clear score, or the like by comprehensively considering a degree of similarity corresponding to a photographing angle of the corresponding subject and previously collected location information of the corresponding subject.

The management unit 120 may receive, from the determination unit 110, a signal on whether the mission has been completed, and issue and manage reward data based on the received signal.

The reward data may include all visible/invisible rewards, e.g., scores, cyber moneys, points, experience values, coupons, etc., which are issued to a corresponding user based on the completion of the mission. The reward data may include battle cards in collectable form, and a battle game in person versus person (PvP) among a plurality of users may be performed through the battle cards.

The mission point 200 means a physical structure located in a predetermined region, and may be found in a process in which a user participating in a mission explores the predetermine region.

The mission point 200 may exist in plurality at different geographical locations in the predetermined region. The mission point 200 may have a form such as a cultural property or landmark in a specific region or an important ruin, but the present invention is not limited thereto. The mission point 200 may mean an artificial structure, an artwork, or a building.

Code data is disposed at a specific location inside or outside the mission point 200. The code data may be disposed at a location which is difficult to be identified from the outside, but the present invention is not limited thereto.

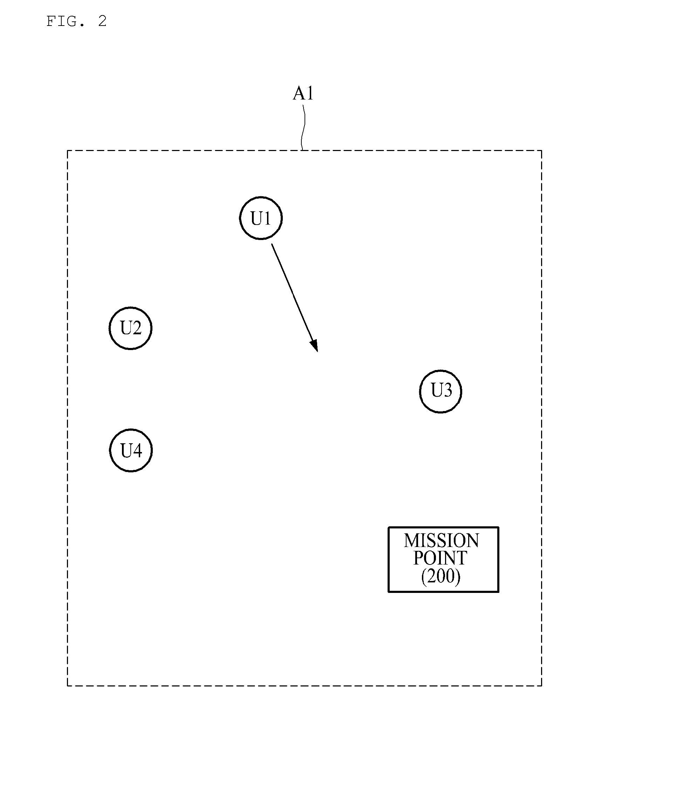

Referring to FIGS. 2 to 4, there are shown diagrams illustrating an example of a game playing process of users constituting the system of FIG. 1.

As shown in FIG. 2, a plurality of users U1, U2, U3, and U4 may perform a mission in a predetermined region A1, and each user searches for the location of the mission point 200 to acquire the code data of the mission point 200. Various other structures may be disposed in the predetermined region A1 such that the location of the mission point 200 is not easily exposed.

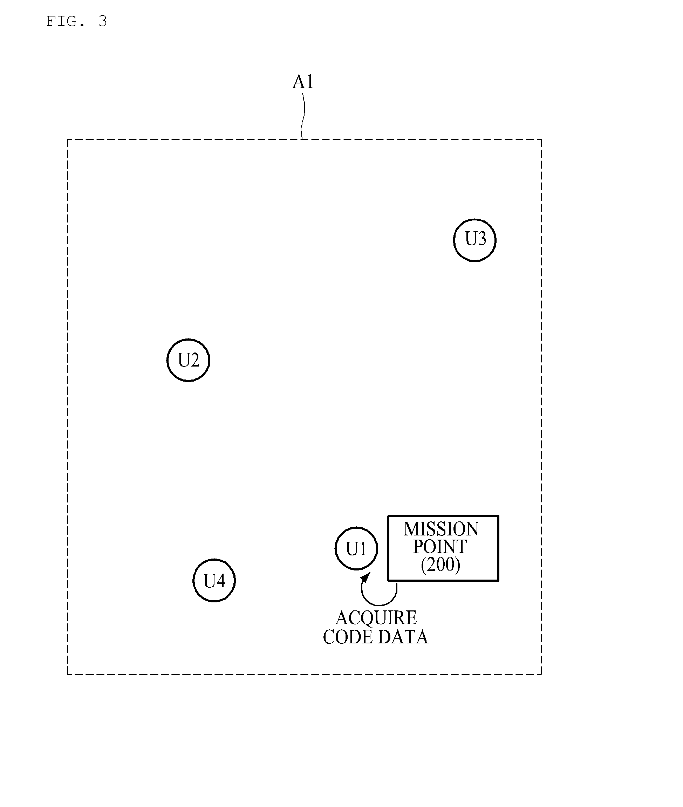

As shown in FIG. 3, in the searching process, a first user U1 may find the location of the mission point 200 based on self-search, cooperation play with another user, hint provided by a guide user, basic information on the mission point, etc. If the first user U1 finds the mission point 200, the user U1 may acquire the code data at a location hidden at the mission point 200.

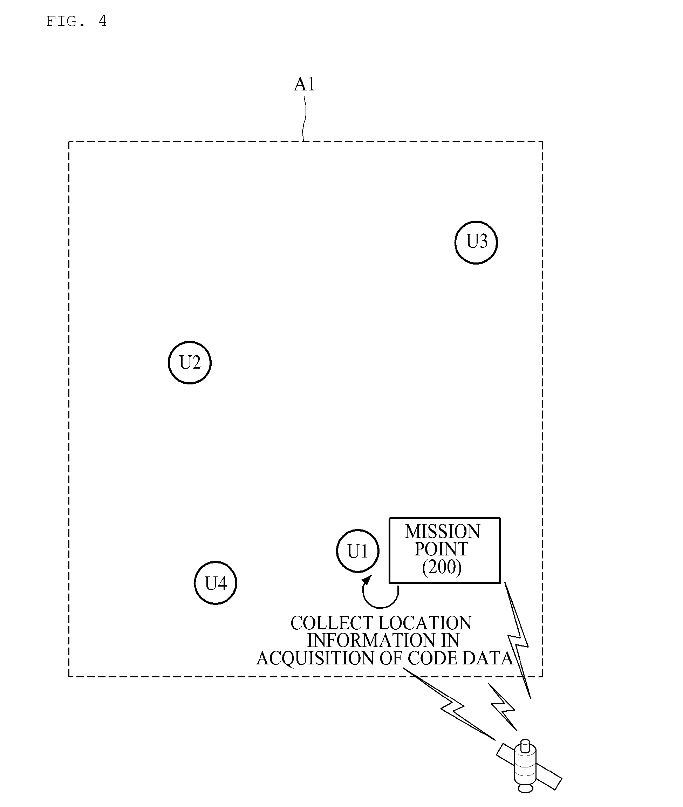

Referring to FIG. 4, as described above in this process, information on the location at which the first user U1 acquires the code data may be collected together with the code data through a location information collecting module such as GPS in the acquisition of the code data, and the determination unit 110 may determine whether the mission has been completed by considering the collected information.

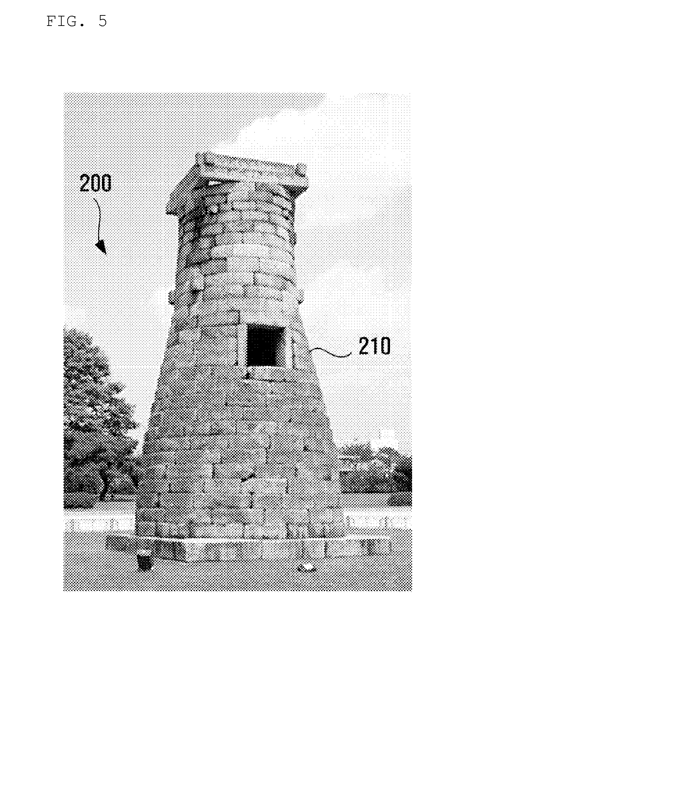

Referring to FIGS. 5 to 8, there are shown diagrams illustrating an example of a method of acquiring the mission point and the code data, included in the system of FIG. 1.

Referring to FIG. 5, the mission point 200 may be a special structure as described above, and may be a cultural property or ruin such as Cheomseongdae as shown in the example of FIG. 5.

Hereinafter, a case where the code data has the form of an image produced by photographing a subject 210 existing at the mission point 200 will be described. A user participating in the mission finds the mission point 200 at which the code data is hidden while searching for a predetermined region.

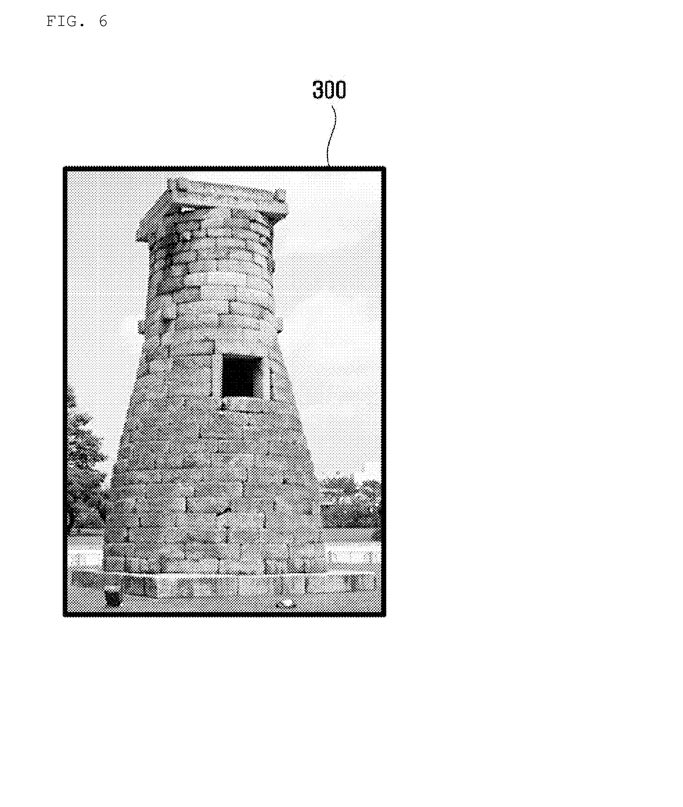

As shown in FIG. 6, if the user finds the mission point 200, the user may acquire the code data existing at the mission point 200, i.e., a photographed image of the subject 210. The photographed image 300 may be data obtained by photographing the subject 210 at a specific point of the subject 210 or a specific angle. That is, guidance for guiding the user to photograph the subject 210 at a predetermined angle or location may be proposed such that the determination unit 110 accurately determines whether the mission has been completed, based on the photographed image 300.

The determination unit 110 may determine whether the mission has been completed by comparing the photographed image 300 with a previously stored reference image, based on the photographed image 300 acquired as described above. In this process, the determination unit 110 may determine whether the mission has been completed by considering location information of a client device together with the photographed image 300. That is, the determination unit 110 may build up a database by previously acquiring location information of Cheomseongdae, and determine whether the photographed image 300 has been photographed at the accurate location of Cheomseongdae by reading location data included in tag information of the photographed image 300.

The determination unit 110 may compare the photographed image 300 of the subject 210 with the reference image and differently determine points, etc. corresponding to the completion of the mission, based on a degree of similarity. Accordingly, reward data corresponding to the completion of the mission can be differently provided to each user.

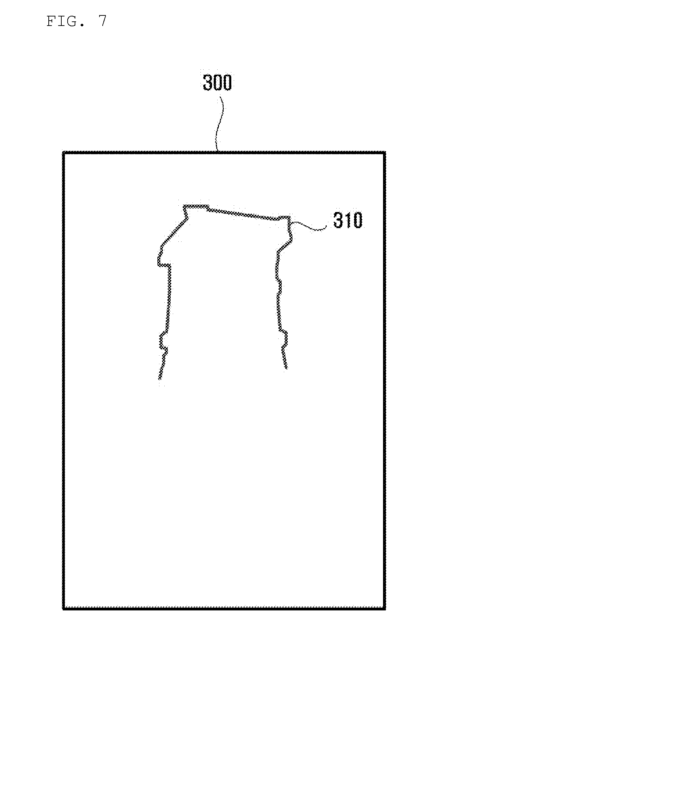

Referring to FIG. 7, the photographed image 300 may be produced from a camera unit of the client device, and the camera unit may provide a portion of the external appearance of the subject 210 as a photographing guideline 310 in the photographing of the subject 210.

That is, when the user intends to photograph the subject 210 in a state in which the user has found the mission point 200, the photographing guideline 310, as shown in FIG. 7, is provided such that the user can easily detect a location and an angle in the photographing of the subject 210, in addition to the provision of a hint on the shape of the subject 210.

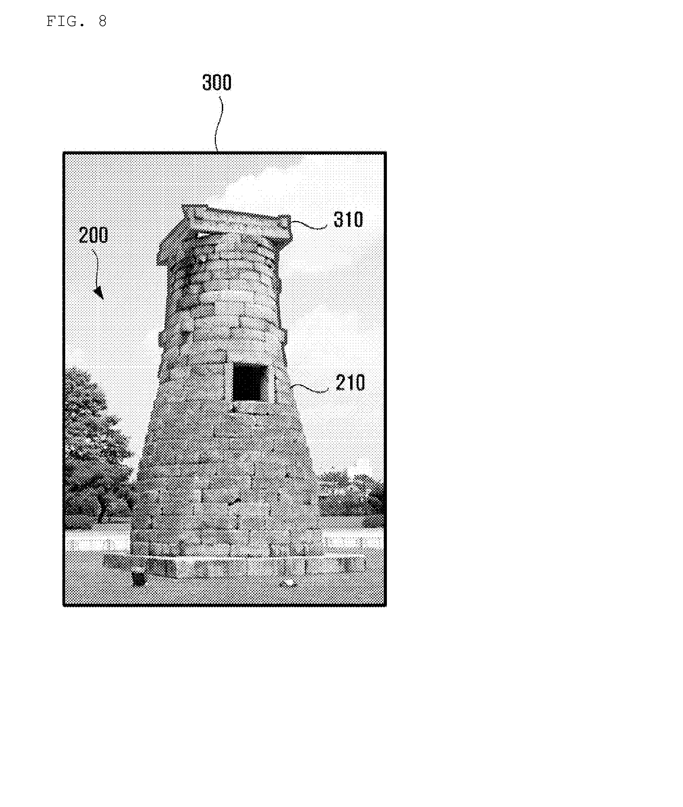

Thus, the user, as shown in FIG. 8, can select a photographing location and a photographing angle, which allow the photographing guideline 310 and the subject 210 to be matched to each other.

As such, the determination unit 110 can quickly and accurately determine whether the mission has been completed based on the photographed image 300 and/or the location information of the photographed image 300.

In some embodiments, the determination unit 110 may determine whether the mission has been completed and a mission clear point by considering a degree of similarity of the photographed image 300 with a reference image together with the photographed image 300 and/or the location information of the photographed image 300. For example, when assuming that, while the degree of similarity of an image 300 photographed by the first user with the reference image is 90% and the cutline of the degree of similarity is 80%, the degree of similarity of an image 300 photographed by a second user is 70%, it may be determined that the first user has completed the mission, and the first user may acquire only a mission clear point of 90% as compared with the degree of similarity of 100%. On the other hand, it may be determined that the second user has not completed the mission, and the second user may again photograph the subject 210 at the mission point 200.

In some embodiments, the determination unit 110 may determine whether the mission has been completed and a mission clear point by considering time information together with the degree of similarity. For example, when assuming that, while the degree of similarity of the photographed image 300 of the first user is 90% and the time required from the start of the mission to the completion of the mission is 20 minutes, the degree of similarity of the photographed image 300 of the second user is 80% and the time required from the start of the mission to the completion of the mission is 5 minutes, the determination unit 110 may determine whether the mission has been completed and the mission clear point by providing a weight to each of the degree of similarity of the photographed image 300 and the time required to complete the mission.

In some embodiments, the determination unit 110 may determine whether the mission has been completed and a mission clear point by considering location information together with the degree of similarity. For example, when the location of the photographed image 300 is out of an error range of the location of the subject 210 even though the degree of similarity of the photographed image 300 of the first user exceeds a reference degree of similarity, it is recognized that the corresponding photographed image 300 is wrong, and therefore, the determination unit 110 may determine that the mission has not been completed.

As described above, the game play of a user and whether a mission has been completed may be determined by combining various methods. As different missions are repeatedly performed, ranks corresponding to mission clear may be generated. As reward data provided from the management unit 120 are accumulated, a new game in a game between users may be made by using reward data such as battle cards.

The case where the code data is the photographed image 300 has been described as an example, but the present invention is not limited thereto. The code data may have the form of a number, character, or image code disposed at a specific location of the mission point 200. The code data may be implemented not only in an image photographing manner but also in a manner that the code data is directly input through a client device, etc.

In some embodiment, the mission point 200 may exist in plurality at different geographical locations in a predetermined region.

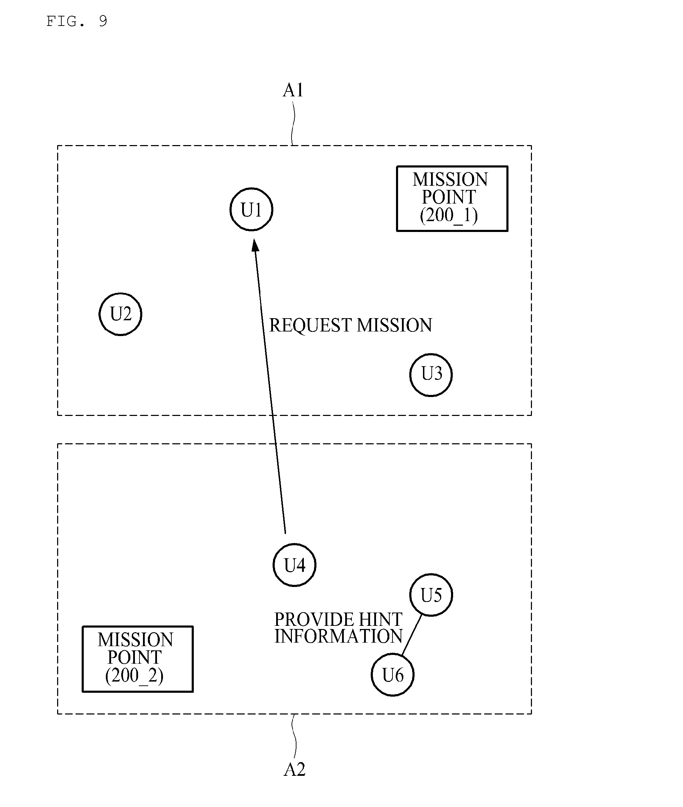

Referring to FIG. 9, there is shown a diagram illustrating another example of the game playing process of the users constituting the system of FIG. 1.

In the example shown in FIG. 9, a client device of a first user U1 may be disposed in a first region A1 where a first mission point 200_1 is located, and a client device of a second user U4 may be disposed in a second region A2 spaced apart from the first region A1.

In this case, the online and offline linked game system according to the embodiment of the present invention may transmit, to the client device of the first user U1, information on the mission point 200_1 transmitted from the client device of the second user U4.

When the client device of the second user U4 requests the client device of the first user U1 of performing a mission in place of the client device of the second user U4, the online and offline linked game system according to the embodiment of the present invention may transmit the request of the client device of the second user U4 to the client device of the first user U1.

That is, client devices of a plurality of users, which perform a mission, may exchange information with one another through the online and offline linked game system according to the embodiment of the present invention, and may share information in cooperation with client devices of users located in another region.

Also, hint information may be provided between client devices of specific users U5 and U6 through the online and offline linked game system according to the embodiment of the present invention.

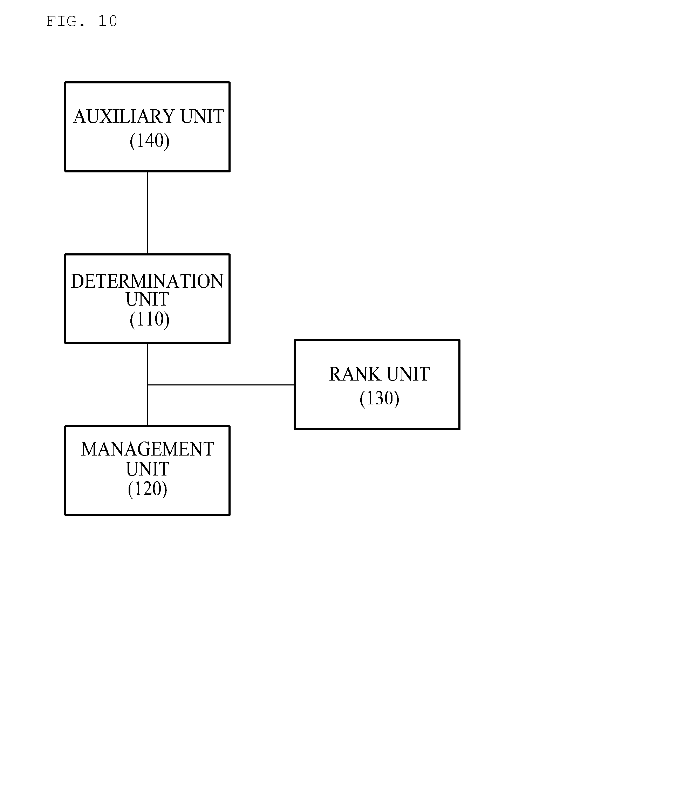

Referring to FIG. 10, there is a shown a block diagram illustrating a configuration of an online and offline linked game system according to another embodiment of the present invention.

The online and offline linked game system according to the embodiment of the present invention includes a determination unit 110 and a management unit 120, and may further include a rank unit 130 and an auxiliary unit 140.

The rank unit 130 may determine ranks between a plurality of users by considering a number of completed missions and a time required to complete the missions. As described above, the rank unit 130 may measure ranks between the plurality of users, classified by various references such as overall users and users in a corresponding region so as to lead interest through competition between the plurality of users, and provide the measured ranks to each user. As each user more quickly and accurately completes a mission, the user can obtain a higher rank.

The auxiliary unit 140 may manage hint information on code data, and the hint information may be provided to users related to a corresponding user. That is, the hint information may be selectively provided among general users. The hint information may be provided to a specific guide user to allow general users to receive the hint information, so that the game play of the general users is smoothly performed. The hint information may be provided to a user through a client device possessed by the user or a device disposed in a region where a mission is performed. For example, when a participating user is a minor, and the auxiliary unit is a guardian, the hint information may be provided to the guardian, and the minor may smoothly perform a mission with the help of the guardian.

Functions of the online and offline linked game system according to the embodiment of the present invention may be implemented by a computer program.

The computer program according to the embodiment of the present invention is used to implement a function of determining whether a mission has been completed based on a degree of similarity of code data as a photographed image of a subject existing at a mission point with a reference image and a function of managing predetermined reward data issued when it is determined that the mission has been completed.

In this case, the code data may be a photographed image of a subject existing at a mission point.

The photographed image is data photographed at a specific point of the subject or a specific angle. The computer program according to the embodiment of the present invention is used to implement a function of determining whether a mission has been completed by comparing a photographed image with a previously stored reference image.

Also, the computer program according to the embodiment of the present invention is used to implement a function of determining whether a mission has been completed by considering location information of a client device together with the degree of similarity.

In this case, the reward data may include battle cards in collectable form, and a battle game in person versus person (PvP) among a plurality of users may be performed through the battle cards.

The mission point may exist in plurality at different geographical locations in a predetermined region.

The computer program according to the embodiment of the present invention is used to implement a function of determining ranks between a plurality of users by considering a number of completed missions and a time required to complete the missions.

The computer program according to the embodiment of the present invention is used to implement a function of managing hint information on code data, and the hint information may be provided to users related to a corresponding user.

When a client device of a first user is disposed in a first region where a mission point is located, and a client device of a second user is located in a second region spaced apart from the first region, the computer program according to the embodiment of the present invention is used to implement a function of transmitting, to the client device of the first user, information on the mission point, transmitted from the client device of the second user.

The several functions described above have been described in detail with reference to FIGS. 1 to 10, and therefore, their descriptions will be omitted.

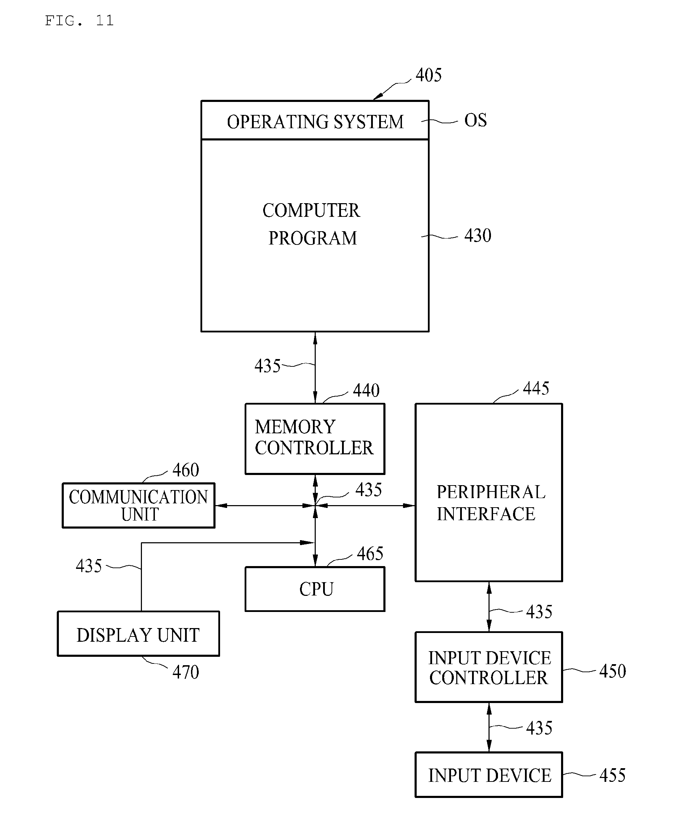

FIG. 11 is a diagram illustrating an example of a computer in which a computer program is installed according to an embodiment of the present invention.

The computer program 430 according to the embodiment of the present invention may be installed in a computer-readable recording medium 405. The computer may include various devices such as a smart phone, a notebook computer, a PC, a tablet computer, and a server, but the present invention is not limited thereto.

Components of the computer may communicate with each other through one or more communication buses or signal lines 435. The computer may have components having a smaller or greater number than those shown in FIG. 11. The computer shown in FIG. 11 may be implemented by hardware, software, or a combination thereof.

The recording medium 405 stores software components, and the software components may include an operating system OS and the computer program according to the embodiment of the present invention.

The recording medium 405 may be a CD, a DVD, a USB, a hard disk, a RAM, a flash memory, or a remote storage unit accessible through a network.

The operating system OS may include various components and drivers for controlling system tasks. Also, the operating system OS may convert data into a packet form so as to transmit a search result, visualization data on the search result, analysis, and additional analysis through a network.

The operating system OS may be Linux, Unix, Window Server OS, iOS, Android OS, or OS for Window PC, but the present invention is not limited thereto.

A CPU 465 loads and executes software components such as the operating system OS and the computer program 430.

A memory controller 440 may control other components such as the CPU 465 a peripheral interface 445 to access the recording medium 405.

A communication unit 460 is used to access a network such as Internet or a mobile communication network or communicate with another adjacent computing device, but the present invention is not limited thereto.

The peripheral interface 445 may connect an input device 455 such as a mouse, a keyboard, or a touch screen to the CPU 465 and the recording medium 405.

An input device controller 450 receives an electrical signal input from the input device 455 to convert the input electrical signal suitable for a standard of the communication bus or signal line 435.

A display unit 470 may display an operating situation of the computer program according to the embodiment of the present invention.

While the present invention has been described with respect to the specific embodiments, it will be apparent to those skilled in the art that various changes and modifications may be made without departing from the spirit and scope of the invention as defined in the following claims.

## Claims

1. An online and offline linked game system, comprising:
a determination unit configured to determine whether a mission has been completed based on a degree of similarity of code data as a photographed image of a subject existing at a mission point with a reference image; and
a management unit configured to manage predetermined reward data issued when the determination unit determines that the mission has been completed.

2. The online and offline linked game system of claim 1, wherein the code data is a photographed image of a subject existing at the mission point.

3. The online and offline linked game system of claim 2, wherein the photographed image is data photographed at a specific point of the subject or a specific angle, and the determination unit determines whether the mission has been completed by comparing the photographed image with a previously stored reference image.

4. The online and offline linked game system of claim 2, wherein the photographed image is produced from a camera unit of a client device, and the camera unit is provided a portion of the external appearance of the subject as a photographing guideline in the photographing of the subject.

5. The online and offline linked game system of claim 1, wherein the determination unit determines whether the mission has been completed by considering location information of the client device together with the degree of similarity.

6. The online and offline linked game system of claim 1, wherein the reward data includes battle cards in collectable form, and a battle game in person versus person (PvP) among a plurality of users is performed through the battle cards.

7. The online and offline linked game system of claim 1, wherein the mission point exists in plurality at different geographical locations in a predetermined region.

8. The online and offline linked game system of claim 1, further comprising a rank unit configured to determine ranks among a plurality of users by considering a number of completed missions and a time required to complete the missions.

9. The online and offline linked game system of claim 1, further comprising an auxiliary unit configured to manage hint information on the code data,
wherein the hint information is provided to users related to a corresponding user.

10. The online and offline linked game system of claim 1, wherein, when a client device of a first user is disposed in a first region where the mission point is located, and a client device of a second user is located in a second region spaced apart from the first region, information on the mission point, transmitted from the client device of the second user, is transmitted to the client device of the first user.

11. A computer program for implementing a function determining whether a mission has been completed based on a degree of similarity of code data as a photographed image of a subject existing at a mission point and a function of managing predetermined reward data issued when it is determined that the mission has been completed.

12. The computer program of claim 11, wherein the code data is a photographed image of a subject existing at the mission point.

13. The computer program of claim 12, wherein the photographed image is data photographed at a specific point of the subject or a specific angle, and the computer program implements a function of determining whether the mission has been completed by comparing the photographed image with a previously stored reference image.

14. The computer program of claim 11, wherein the computer program implements a function of determining whether the mission has been completed by considering location information of the client device together with the degree of similarity.

15. The computer program of claim 11, wherein the reward data includes battle cards in collectable form, and a battle game in person versus person (PvP) among a plurality of users is performed through the battle cards.

16. The computer program of claim 11, wherein the mission point exists in plurality at different geographical locations in a predetermined region.

17. The computer program of claim 11, wherein the computer program implements a function of determining ranks among a plurality of users by considering a number of completed missions and a time required to complete the missions.

18. The computer program of claim 11, wherein the computer program implements a function of managing hint information on the code data, and the hint information is provided to users related to a corresponding user.

19. The computer program of claim 11, wherein, when a client device of a first user is disposed in a first region where the mission point is located, and a client device of a second user is located in a second region spaced apart from the first region, information on the mission point, transmitted from the client device of the second user, is transmitted to the client device of the first user.
